(19) Europäisches Patentamt
European Patent Office
Office européen des brevets

(11) **EP 4 785 806 A1**

(12) **EUROPEAN PATENT APPLICATION**

(43) Date of publication:
**05.08.2026 Bulletin 2026/32**

(21) Application number: 25154988.7

(22) Date of filing: **30.01.2025**

(51) International Patent Classification (IPC):
*A23J 3/22* (2006.01)    *A23J 3/26* (2006.01)
*A23L 17/60* (2016.01)    *A23L 33/185* (2016.01)
*A23P 30/20* (2016.01)    *A23J 3/18* (2006.01)
*A23L 33/175* (2016.01)

(52) Cooperative Patent Classification (CPC):
**A23J 3/26; A23J 3/18; A23J 3/227; A23L 33/175;
A23L 33/185; A23P 30/20;** A23V 2250/202;
A23V 2250/5486

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Société des Produits Nestlé S.A.**
**1800 Vevey (CH)**

(72) Inventors:
• **AMAGLIANI, Luca**
  **1010 Lausanne (CH)**
• **DE OLIVEIRA REIS, Guilherme**
  **1004 Lausanne (CH)**
• **BUSOM DESCARREGA, Josep**
  **1030 Bussigny (CH)**
• **GANCEL, Charlotte**
  **1271 Givrins (CH)**

(74) Representative: **Wakasugi, Yuki**
  **Société des Produits Nestlé S.A.**
  **Avenue Nestlé 55**
  **1800 Vevey (CH)**

(54) **WET EXTRUDED FOOD PRODUCT BASED ON PLANT PROTEIN AND SEAWEED FLOUR**

(57)    The invention relates a wet extruded food product comprising 30-50 wt% of a blend of plant protein ingredient and seaweed flour, and 50-70 wt% of water relative to the total weight of the wet extruded food product, wherein the seaweed flour is whole macroalgae powder containing at least 10% protein, and the seaweed flour accounts for at least 20 wt% of the total weight of the blend of plant protein ingredient and seaweed flour.

FIG. 4

EP 4 785 806 A1

**Description**

**TECHNICAL FIELD**

The present invention relates generally to the field of wet extruded food products. For example, the present invention relates to wet extruded food products such as meat or fish analogues.

**BACKGROUND OF THE INVENTION**

Increasing the utilization of alternative proteins in human food is of paramount importance to reduce the high impact that livestock farming and fishing have on environmental sustainability (i.e., biodiversity loss, land use, freshwater depletion, pollution and climate change) and food security. The rising awareness towards these issues as well as the health-related hazards caused by excessive consumption of animal products has led to a growth in the number of consumers following flexitarian, vegetarian and vegan diets. To address their needs, over the past few years, food companies have launched on the market a variety of meat and fish analogues, although their acceptance in Western countries is still limited. In order to promote a reduction in meat and fish consumption, it is essential to develop analogues with nutrient composition, texture, flavor and taste comparable to animal products.

Products with meat- or fish-like structure can be obtained by texturization of plant proteins through thermomechanical processing, including low moisture extrusion (<40% water, LME) and high moisture extrusion (40-70% water, HME). Thermomechanical processing involves the use of high temperatures (up to 180°C) combined with shear mixing that provide an energy input to the concentrated protein system, thus promoting a phase transition which results in the formation of a fibrous, layered fibrous or filamentous gelled morphology upon cooling. Products obtained by LME are typically referred to as texturized vegetable proteins (TVPs) and display an expanded, porous structure promoted by the sudden evaporation of water at the die exit. Conversely, in HME, cooling the protein matrix below 100°C using a long die prevents water evaporation and allows the formation of extrudates with a well-defined fibrous structure which closely resembles that of meat or fish. Several food companies have recently switched from the use of commercially available TVPs to performing in-house HME to obtain extrudates with the desired textural and organoleptic properties, and which can thus be adapted to different applications depending on processing conditions (e.g., temperature and shear rate) and recipe (water concentration, ionic strength, pH, the presence of fat and/or polysaccharides).

Several studies have recently shown the potential of various plant proteins, including, but not limited to, gluten, soy and pea for the development of meat and fish analogues. For example, wheat gluten is the most commonly used traditional plant-based protein source in the development of meat or fish analogues. However, the identification of additional protein sources is of paramount importance to address the needs of the growing world population, expected to increase by nearly 2 billion in 2050. Seaweed represents an interesting option due to: (i) its relatively high protein concentration, ranging from approximately 10 to 30% on dry basis, depending on the species; (ii) its sustainable cultivation, requiring no arable land and minimal inputs; (iii) its role in carbon dioxide sequestration and thus mitigation of ocean acidification. Therefore, inclusion of seaweed in their products can provide food companies with a tool to overcome potential shortages of plant proteins due to the pressure that many crops often face due to climate change (e.g., heavy rainfall, floods, droughts, heat and cold waves). There is also a growing trend in consumers to prefer clean-label food products based on less-processed ingredients, as well as further nutritional benefits in plant-based products.

It would therefore be desirable to provide a plant-based meat or fish analogue which meets the above consumer needs.

Any reference to prior art documents in this specification is not to be considered an admission that such prior art is widely known or forms part of the common general knowledge in the field.

**SUMMARY OF THE INVENTION**

The object of the present invention is to improve the state of the art, and in particular to provide a wet extruded food product and a method of preparing such wet extruded food product that overcome the problems of the prior art and addresses the needs described above, or at least to provide a useful alternative.

The inventors were surprised to see that the object of the present invention could be achieved by the subject matter of the independent claims. The dependent claims further develop the idea of the present invention.

Accordingly, an embodiment of the invention proposes a wet extruded food product comprising 30-50 wt% of a blend of plant protein ingredient and seaweed flour, and 50-70 wt% of water relative to the total weight of the wet extruded food product, wherein the seaweed flour is whole macroalgae powder containing at least 10% protein, and the seaweed flour accounts for at least 20 wt% of the total weight of the blend of plant protein ingredient and seaweed flour.

There is also provided a method of preparing a wet extruded food product, the method comprising steps of:

a) feeding an extruder barrel with 30-50 wt% of a blend of plant protein ingredient and seaweed flour, and 50-70 wt% of water relative to the total weight of the wet extruded food product, and

b) extruding the mixture of step a) through a cooling die to form the wet extruded food product, wherein the seaweed flour is whole macroalgae powder containing at least 10% protein, and the seaweed flour accounts for at least 20 wt% of the total weight of the blend of plant protein ingredient and seaweed flour.

In some embodiments, the seaweed flour is flour of nori *(Porphyra spp.)* and/or sea lettuce (*Ulva spp.*).

In some embodiments, the seaweed flour accounts for 20-60 wt% of the total weight of the blend.

In some embodiments, the seaweed flour accounts for 20-40 wt% of the total weight of the blend.

In some embodiments, the seaweed flour contains essential amino acids in a total amount of at least 30g/100g protein of the seaweed flour.

In some embodiments, the plant protein ingredient is wheat gluten.

In some embodiments, the extrusion step b) is performed at 120-180°C.

The inventors have found that seaweed flours can be a good alternative protein source to replace existing plant protein sources such as wheat gluten in plant-based wet extrudates. Replacing at least 20 wt% of plant protein source with seaweed flour can provide a more nutritious wet extruded food product richer in fibers and having a better amino acids profile without significant modification in processing conditions. The seaweed flour in the wet extruded food product according to the invention is whole macroalgae powder containing at least 10% protein. Use of such less-processed whole seaweed flour is more appealing to consumers compared to fibers extracted from seaweeds such as alginate and carrageenan. Different ratios of seaweed flour to replace plant protein source can provide a variety of textures and sensory properties, enabling a broader application and novel experiences in plant-based extrudates for consumers.

These and other aspects, features and advantages of the invention will become more apparent to those skilled in the art from the detailed description of embodiments of the invention, in connection with the attached drawings.

## BRIEF DESCRIPTION OF THE DRAWINGS

Figure 1 shows drawing of an extrudate sample (grey) and the specimen extraction location and orientation (dark grey) for microstructure analysis by X-ray tomography.

Figure 2 shows X-ray tomography 2D scan (a) and complete 3D scan (b) of an extrudate specimen.

Figure 3 shows 2D projections of an extrudate with the microstructure parameters outlined, including fiber thickness in red lines (a), fiber spacing in red lines (b) and fiber volume, which accounts for the fiber volume (c) divided by the total structure volume (d).

Figure 4 shows X-ray tomography 2D projections (xy plane, perpendicular to extrusion direction) of the extrudates obtained *via* high moisture extrusion of blends of WG and SF 1 or SF 2 at various WG-to-SF ratios.

Figure 5 shows fiber thickness (a), spacing thickness (b) and fiber volume (c) of extrudates obtained *via* high moisture extrusion of blends of WG and SF 1 or SF 2 at various WG-to-SF ratios, as extracted from the X-ray tomography 2D projections of Figure 4.

Figure 6 shows peak force required to cut extrudates (20 x 20 x 8 mm, L x W x H) obtained *via* high moisture extrusion of blends of WG and (a) SF 1 or (b) SF 2 at various WG-to-SF ratios throughout their entire thickness, as determined using a TA.XT Plus texture analyzer (Stable Micro Systems, Surrey, UK) equipped with a light knife blade probe guillotine in the directions perpendicular (PF 1) and parallel (PF 2) to the extrudate outflow from the extruder.

Figure 7 shows water uptake of extrudates obtained *via* high moisture extrusion of blends of WG and SF 1 or SF 2 at various WG-to-SF ratios.

## DETAILED DESCRIPTION OF THE INVENTION

As used in the specification, the words "comprise", "comprising" and the like are to be construed in an inclusive sense, that is to say, in the sense of "including, but not limited to", as opposed to an exclusive or exhaustive sense.

As used in the specification, the word "about" should be understood to apply to each bound in a range of numerals. Moreover, all numerical ranges should be understood to include each whole integer within the range.

As used in the specification, the singular forms "a", "an", and "the" include plural referents unless the context clearly dictates otherwise.

As used in the specification, the term "substantially free" means that no more than about 10 weight percent, preferably no more than about 5 weight percent, and more preferably no more than about 1 weight percent of the excluded material is present. In a preferred embodiment, "substantially free" means that no more than about 0.1 weight percent of the excluded material remains. "Entirely free" typically means that at most only trace amount of the excluded material is present, and preferably, no detectable amount is present. Conversely, "substantially all" typically means that at least about 90 weight percent, preferably at least about 95 weight percent, and more preferably at least about 99 weight percent of the material is present.

Unless noted otherwise, all percentages in the specification refer to weight percent, where applicable.

Unless defined otherwise, all technical and scientific terms have and should be given the same meaning as commonly understood by one of ordinary skill in the art to which this invention belongs.

**An** embodiment of the present invention provides a wet extruded food product. Said food product is obtained by wet extrusion or high moisture extrusion (HME).

The wet extruded food product according to the present invention comprises a blend of plant protein ingredient and seaweed flour. The plant protein ingredient may be selected from the group consisting of plant protein flour, plant protein powder, plant protein isolate, plant protein concentrate and a mixture thereof. In some embodiments, the plant protein ingredient is derived from Fabaceae botanical family such as soy, pea, mung bean, faba, chickpea and lentil; from Poaceae botanical family such as wheat gluten, rice, barley and corn; from Brassicaceae botanical family such as canola and rapeseed; or combinations thereof. Preferably, the plant protein ingredient is wheat gluten.

The wet extruded food product according to the present invention comprises 30-50 wt% of a blend of plant protein ingredient and seaweed flour, and 50-70 wt% of water relative to the total weight of the wet extruded food product. In some embodiments, the wet extruded food product comprises 40-50 wt% of the blend of plant protein ingredient and seaweed flour and 50-60 wt% of water relative to the total weight of the wet extruded food product.

The seaweed flour is whole macroalgae powder containing at least 10% protein. The seaweed flour does not refer to powders of microalgae or microphytes. In some embodiments, the seaweed flour contains between 10 and 30% protein, or between 10 and 27.5% protein, or between 12.5 and 25% protein, or between 12.5 and 15% protein, or between 20 and 25% protein.

In some embodiments, the seaweed flour contains at least 10%, or at least 15%, or at least 20%, or at least 30%, or at least 35%, or at least 40% fiber.

In some embodiments, the seaweed flour contains less than 5%, or less than 3%, or less than 2.5%, or less than 2% fat.

The seaweed flour accounts for at least 20 wt% of the total weight of the blend of plant protein ingredient and seaweed flour. In some embodiments, the seaweed flour accounts for between 20 and 100 wt%, or between 20 and 90 wt%, or between 20 and 80 wt%, or between 20 and 70 wt%, or between 20 and 60 wt%, or between 20 and 50 wt%, or between 20 and 40 wt% of the total weight of the blend of plant protein ingredient and seaweed flour.

Those skilled in the art will understand that they can freely combine all features of the present invention disclosed herein. In particular, features described for the product of the present invention may be combined with the use of the present invention and vice versa. Further, features described for different embodiments of the present invention may be combined.

Furthermore, where known equivalents exist to specific features, such equivalents are incorporated as if specifically referred in this specification. Further advantages and features of the present invention are apparent from the figures and non-limiting examples.

**EXAMPLES**

**Example 1**

**Nutrient composition of the ingredients**

The ingredients used included two commercial seaweed flours obtained from sea lettuce (*Vlva spp.*) and nori (*Porphyra spp.*), referred to hereinafter as SF 1 and SF 2, respectively, and a commercial wheat gluten, referred to hereinafter as WG.

The proximate composition of the ingredients was determined using the standard methods of the Association of Analytical Chemists (AOAC). Total nitrogen was determined by the Kjeldahl method and a nitrogen-protein conversion factor of 6.25 was used to calculate the protein concentration of the protein ingredients. Moisture concentration was determined by oven drying at 103°C for 5 hours. Ash concentration was determined by dry ashing in a muffle furnace at 500°C for 5 hours. Fat concentration was determined by acid hydrolysis using a Hydrotherm (Gerhardt Analytical Systems, Königswinter, Germany) followed by extraction with petroleum ether using a Soxtherm (Gerhardt Analytical Systems, Königswinter, Germany). Total dietary fiber was determined using the enzymatic kit K-TDFR (Megazyme, Bray, Co. Wicklow, Ireland). Total carbohydrate (excluding fiber) was calculated by difference (100 - sum of protein, moisture, ash, fat and fiber). The proximate composition of SF 1, SF 2 and WG is reported in Table 1.

Table 1: Proximate composition (g/100 g) of SF 1, SF 2 and WG.

|  | SF 1 | SF 2 | WG |
|---|---|---|---|
| Protein | 14.4 | 24.4 | 80.1 |
| Fat | 0.27 | 2.05 | 5.02 |
| Carbohydrate | 3.64 | 8.22 | 8.56 |
| Fiber | 43.8 | 39.0 | 1.05 |
| Ash | 22.5 | 18.1 | 0.23 |
| Moisture | 15.4 | 8.16 | 5.04 |

SF 2 displayed a significantly higher protein concentration compared to SF 1 (i.e., 24.4 *vs* 14.4 g/100 g), while the fiber concentration was similar in the two seaweed flours (i.e., 43.8 *vs* 39.0 g/100 g). WG had a markedly higher protein concentration (i.e., 80.1 g/100 g) compared to that of both seaweed flours, while it was almost devoid of fiber (i.e., 1.05 g/100 g). Therefore, inclusion of seaweed flours at specific concentrations in gluten-containing extrudates might represent a way to increase the fiber concentration of the latter, while keeping a total protein concentration which enables the processability and desired textural properties of the derived food products.

The amino acid profile of the protein ingredients was determined by acid hydrolysis followed by ion-exchange chromatography. Tryptophan concentration was determined by alkaline hydrolysis followed by IEC. The non-essential and essential amino acid profiles of SF 1, SF 2 and WG are reported in Table 2 and 3, respectively.

Table 2: Non-essential amino acid profile (g/100 g protein) of SF 1, SF 2 and WG.

|  | SF 1 | SF 2 | WG |
|---|---|---|---|
| Alanine | 7.66 | 11.1 | 2.45 |
| Arginine | 4.39 | 5.00 | 3.38 |
| Aspartic acid | 9.19 | 8.38 | 3.03 |
| Cystine | 1.62 | 1.72 | 2.20 |
| Glutamic acid | 8.91 | 9.76 | 37.8 |
| Glycine | 4.96 | 6.10 | 3.27 |
| Proline | 3.66 | 3.78 | 12.1 |
| Serine | 4.39 | 4.02 | 4.59 |
| Tyrosine | 2.49 | 2.91 | 3.28 |

Table 3: Essential amino acid (EAA) profile (g/100 g protein) of SF 1, SF 2 and WG.

|  | SF 1 | SF 2 | WG |
|---|---|---|---|
| Histidine | 6.34 | 1.32 | 1.97 |
| Isoleucine | 3.41 | 2.96 | 3.61 |
| Leucine | 5.80 | 5.96 | 6.64 |
| Lysine | 3.93 | 4.84 | 1.62 |
| Methionine | 1.52 | 1.57 | 1.40 |
| Phenylalanine | 4.65 | 3.31 | 4.99 |
| Threonine | 4.12 | 4.82 | 2.45 |
| Tryptophan | 1.47 | 1.23 | 0.96 |
| Valine | 5.09 | 5.50 | 3.83 |
| Total EAAs | 36.3 | 31.5 | 27.5 |

The two seaweed flours displayed relatively similar amino acid profiles, the main differences being the considerably higher concentration of alanine in SF 2 (i.e., 11.1 *vs* 7.66 g/100 g protein) and of the essential amino acid (EAA) histidine in SF 1 (i.e., 6.34 *vs* 1.32 g/100 g protein). Interestingly, when compared to WG, the two SFs had a significantly higher concentration of total EAAs (i.e., 31.5-36.3 *vs* 27.5 g/100 g protein).

**Example 2**

**High moisture extrusion trials of the ingredients and blends thereof**

High moisture extrusion trials were performed using a Brabender TwinLab-F 20/40 FT12 twin-screw extruder (Anton Paar GmbH, Graz, Austria) comprising four barrels. A Brabender twin-screw feeder DDSR20 (Anton Paar GmbH, Graz, Austria) was used to feed the ingredients into the first barrel and water was injected into the second barrel using a Watson-Marlow 323Du/D peristaltic pump (Spirax Group plc, Cheltenham, UK) at a constant flow rate to obtain the desired water concentration. To prevent expansion of the matrix and facilitate fibrous structure formation, a Brabender modular cooling die with 3 separate heating/cooling zones with dimensions of 300 x 20 x 9 mm (L × W x H) was installed at the end of the extruder. The conditions used to process the seaweed flours and their blends with WG are summarized in Table 4 and 5. The extrudates produced in this example 2 were used in the following examples 3 to 5. As seen in Tables 4 and 5, replacing WG with seaweed flours required no major modifications of the processing parameters to produce the derived extrudates.

**Table 4:** Processing conditions used to process SF 1 and its blends with WG.

| | WG:SF 1 | | | | |
|---|---|---|---|---|---|
| | **100:0** | **80:20** | **60:40** | **40:60** | **0:100** |
| **Flow rate (kg/h)** | 4.6 | 4.8 | 4.8 | 4.8 | 4.8 |
| **Moisture (%)*** | 47.9 | 52.8 | 56.2 | 57.3 | 64.3 |
| **Screw speed (rpm)** | 140 | 130 | 130 | 130 | 140 |
| **Barrel 1 (°C)** | 40 | 40 | 40 | 40 | 40 |
| **Barrel 2 (°C)** | 80 | 80 | 80 | 80 | 80 |
| **Barrel 3 (°C)** | 165 | 165 | 165 | 165 | *155* |
| **Barrel 4 (°C)** | 165 | 165 | 165 | 165 | *155* |
| **Cooling die (°C)** | 70 | 70 | 70 | 70 | 70 |
| * It takes into account the moisture concentration of the individual ingredients and their blends | | | | | |

**Table 5:** Processing conditions used to process SF 2 and its blends with WG.

| | WG:SF 2 | | | | |
|---|---|---|---|---|---|
| | **100:0** | **80:20** | **60:40** | **40:60** | **0:100** |
| **Flow rate (kg/h)** | 4.6 | 4.4 | 4.6 | 4.4 | 4.6 |
| **Moisture (%)*** | 47.9 | 52.0 | 52.0 | 54.1 | 50.3 |
| **Screw speed (rpm)** | 140 | 140 | 140 | 140 | 140 |
| **Barrel 1 (°C)** | 40 | 40 | 40 | 40 | 40 |
| **Barrel 2 (°C)** | 80 | 80 | 80 | 80 | 70 |
| **Barrel 3 (°C)** | 165 | *155* | 165 | *155* | 165 |
| **Barrel 4 (°C)** | 165 | *155* | 165 | *155* | 165 |
| **Cooling die (°C)** | 70 | 65 | 70 | 65 | 70 |
| * It takes into account the moisture concentration of the individual ingredients and their blends | | | | | |

**Example 3**

Microstructure of the extrudates was analyzed by X-ray tomography. Before analysis, the extrudates were subjected to freeze-drying, a process known to preserve the overall structural features of biological samples by promoting water sublimation in a microstructure which is locked-in in a frozen state (-20°C). During the freezing step, water concentrates at the interfaces between the fibers, hence gently separating them. Afterwards, when water is sublimated, the space previously occupied by the ice crystals is emptied providing contrast of each individual fiber within the fibrous structure.

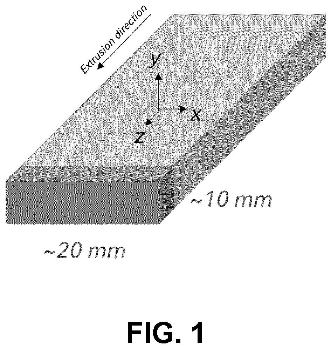

During the freeze-drying process, the temperature of the frozen extrudates was increased from -20°C to 20°C over 3 days under vacuum. Once the freeze-drying process was completed, a portion of the extrudates was extracted to obtain specimens of dimensions for the whole extrudate section of 20 x 10 x 5 mm (x, y and z, respectively, see Figure 1).

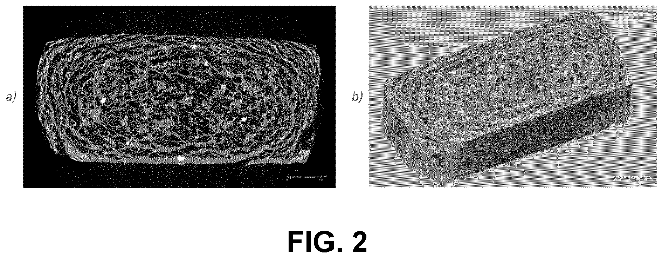

The specimens were then analyzed with a MicroCT-35 X-ray tomograph (SCANCO Medical AG, Brüttisellen, Switzerland) employing an accelerating voltage of 55 kV, voxel size of 10 $\mu$m and integration time of 350 ms. One scan per specimen was performed. Examples of a partial 2D view and a complete 3D scan after reconstruction are shown in Figure 2.

Once the 3D scan was acquired, the data was post-processed with the software AVIZO to extract quantitative microstructure parameters. Data treatment was performed as follows:

1. Data filtering: to remove the acquisition "noise";
2. Data segmentation: to segment the extrudate structure from the background *via* grey level;
3. Data separation: to differentiate the individual features present in the segmented data *via* watershed algorithm;
4. Data analysis: to extract the quantitative parameters of each individual feature.

The relevant quantitative parameters extracted are the following:

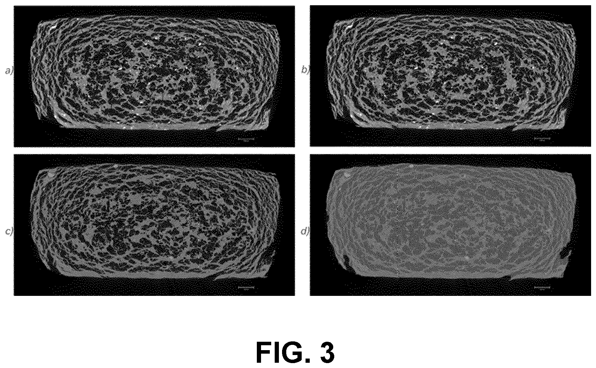

- Fiber thickness: total volume of the fibers structure divided by the total surface of the fibers structure. In the particular case of a structure composed of elongated fibers it corresponds to the average thickness of the features (See Figure 3a).
- Spacing thickness: total volume of the empty spaces in the fibers structure divided by the total surface of the empty spaces of the fibers structure. In the particular case of a structure composed of elongated fibers it corresponds to the average thickness of the spaces between the fibers (See Figure 3b).
- Fiber volume: total volume of the fibers (See Figure 3c) divided by the total volume of the sample (which comprises fibers and the spaces in between, See Figure 3d).

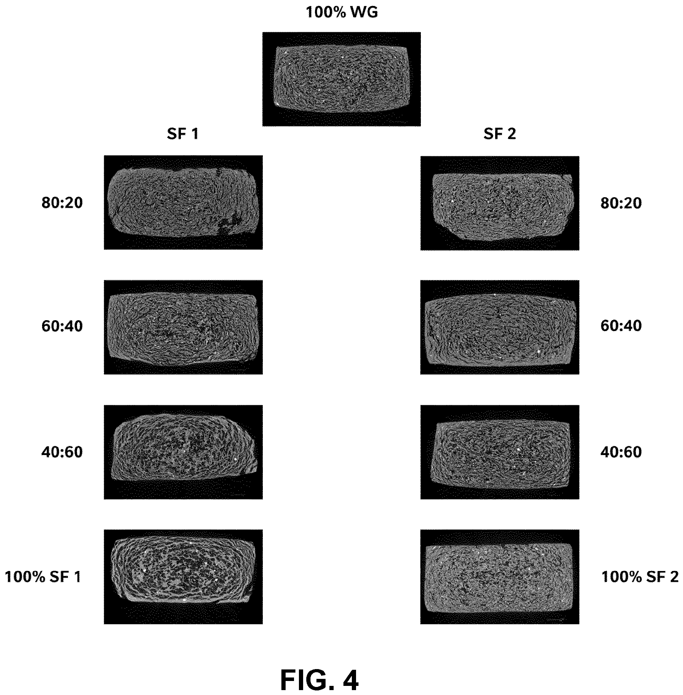

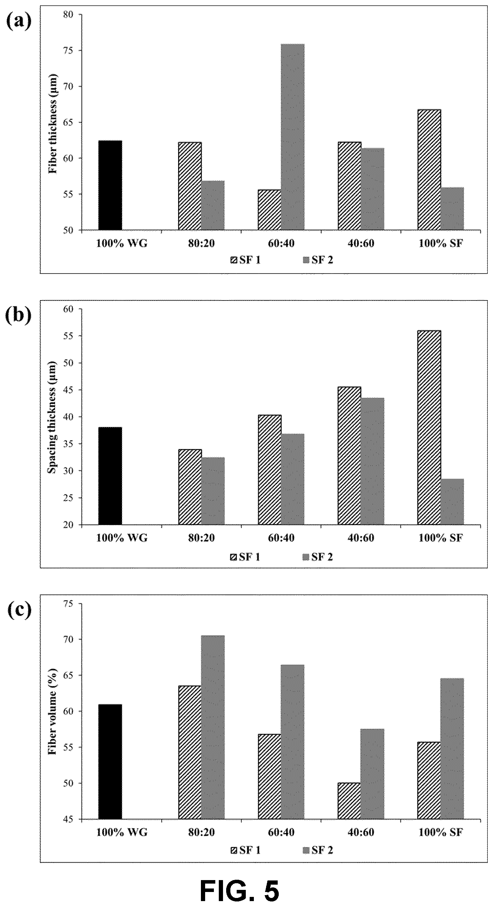

The microstructure of the extrudates was variously affected by the inclusion of SFs (Figure 4 and 5). The fiber thickness of samples containing SF 1 was within a relatively narrow range, that is 56-67 $\mu$m, while a maximum value of 76 $\mu$m was obtained upon replacement of 40% WG with SF 2. An increase in the spacing thickness was observed with increasing inclusion levels of SFs, that is from 38 $\mu$m (100% WG) up to 56 and 43 $\mu$m for SF 1 and SF 2, respectively, while the extrudate based entirely on SF 2 displayed a marked decrease to 28 $\mu$m. With regards to fiber volume, increasing the inclusion level of the two SFs provided a similar trend, with an increase from 61% to 64-71% upon 20% WG replacement, a gradual decrease down to 50-58% upon 60% WG replacement, and an increase to 56-65% observed for the extrudates based entirely on SFs. However, extrudates containing SF 2 displayed 5-10% more fiber volume than those containing SF 1 at any given SF concentration. The microstructure of extrudates influences both their texture and the sensory properties of the derived meat and fish analogues, thus combinations of WG and SF might provide novel sensory experiences to such products.

**Example 4**

**Textural properties of the extrudates**

The cutting force of the extrudates was analyzed using a TA.HD Plus texture analyzer (Stable Micro Systems, Godalming, UK). Square-shaped specimens (20 x 20 x 8 mm, L x W x H) were cut throughout their entire thickness using a blade set with guillotine (HDP/BS 90mm probe, Stable Micro Systems, Godalming, UK) at a speed of 1 mm/sec and the peak cutting force was recorded. Analyses were performed in the directions perpendicular (PF 1) and parallel (PF 2) to the extrudate outflow from the extruder. All the analyses were performed with at least eight replicates.

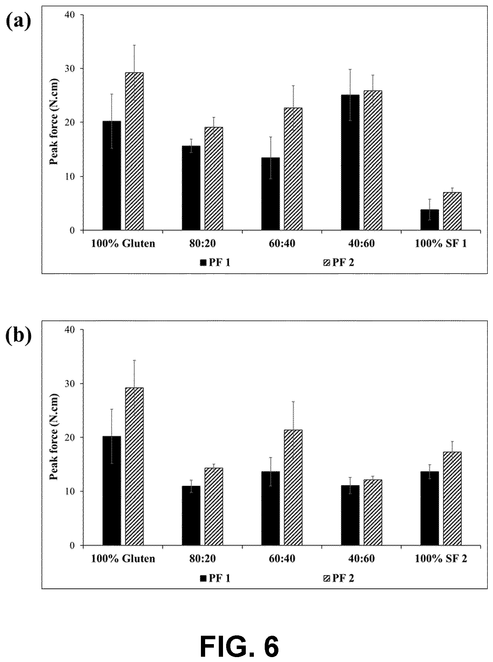

Interestingly, PF 2 was systematically higher than PF 1 and, as already observed for the microstructure (see Example 3), the textural properties of the extrudates were variously affected by the inclusion of SFs (Figure 6). A general trend was observed that extrudates comprising SFs had lower PF values compared to the one based entirely on WG, thus inclusion of SF might represent a tool to achieve a wider range of textures in meat or fish analogues when compared to products based on texturized WG alone.

**Example 5**

**Water uptake of the extrudates**

Water uptake of the extrudates was performed to determine the capacity of the extrudates to absorb water during cooking. The extrudates, with a length of ~2 cm in length and a weight of 45g, were immersed in water at a controlled temperature of 85°C for 10 minutes. After the 10-minute immersion, the extrudates were removed from the water and allowed to rest for 5 minutes.

Subsequently, the extrudates were re-weighed to determine the change in weight due to water absorption. The results were expressed as the percentage of water uptake using the following formula:

$$Water\ uptake\ (\%) = \frac{(Weigh\ after\ g - Weigh\ before\ g)\ x\ 100}{Weight\ before\ g}$$

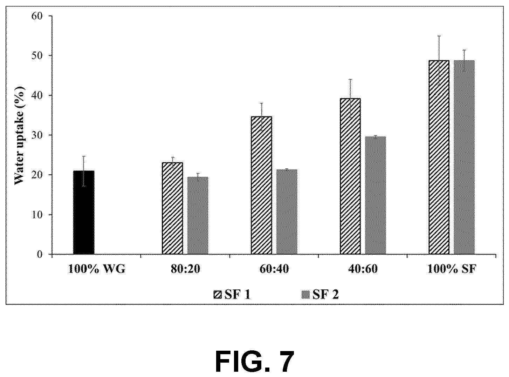

Fig. 7 shows that the water uptake of the extrudates increased with increasing inclusion levels of SF, that is from 21% for the one based entirely on WG to 49% for those based entirely on SF, with the increase being more marked for SF 1 when compared to SF 2 for levels of inclusion of 40 and 60%.

The water uptake of an extrudate may be related to the amount of water that the extrudate can absorb during cooking, thus impacting the juiciness of the extrudate. Replacing 20% of WG with SF 1 or SF 2 would still maintain the juiciness comparable to the extrudate of 100% WG, and notably, replacement of WG with SF 1 would provide an increased juiciness in the resulting extrudate.

Although the invention has been described by way of example, it should be appreciated that variations and modifications may be made without departing from the scope of the invention as defined in the claims.

**Claims**

1. A wet extruded food product comprising 30-50 wt% of a blend of plant protein ingredient and seaweed flour, and 50-70 wt% of water relative to the total weight of the wet extruded food product, wherein the seaweed flour is whole macroalgae powder containing at least 10% protein, and the seaweed flour accounts for at least 20 wt% of the total weight of the blend of plant protein ingredient and seaweed flour.

2. The wet extruded food product according to claim 1, wherein the seaweed flour is flour of nori (*Porphyra spp.*) and/or sea lettuce (*Ulva spp.*).

3. The wet extruded food product according to claim 1 or 2, wherein the seaweed flour accounts for 20-60 wt% of the total weight of the blend.

4. The wet extruded food product according to claim 3, wherein the seaweed flour accounts for 20-40 wt% of the total weight of the blend.

5. The wet extruded food product according to any one of claims 1 to 4, wherein the seaweed flour contains essential amino acids in a total amount of at least 30g/100g protein of the seaweed flour.

6. The wet extruded food product according to any one of claims 1 to 5, wherein the plant protein ingredient is wheat gluten.

7. A method of preparing a wet extruded food product, the method comprising steps of:

   a) feeding an extruder barrel with 30-50 wt% of a blend of plant protein ingredient and seaweed flour, and 50-70 wt% of water relative to the total weight of the wet extruded food product, and
   b) extruding the mixture of step a) through a cooling die to form the wet extruded food product, wherein the seaweed flour is whole macroalgae powder containing at least 10% protein, and the seaweed flour accounts for at least 20 wt% of the total weight of the blend of plant protein ingredient and seaweed flour.

8. The method according to claim 7, wherein the seaweed flour is flour of nori (*Porphyra spp.*) and/or sea lettuce (*Ulva spp.*).

9. The method according to claim 7 or 8, wherein the seaweed flour accounts for 20-60 wt% of the total weight of the blend.

10. The method according to claim 9, wherein the seaweed flour accounts for 20-40 wt% of the total weight of the blend.

11. The method according to any one of claims 7 to 10, wherein the seaweed flour contains essential amino acids in a total amount of at least 30g/100g protein of the seaweed flour.

12. The method according to any one of claims 7 to 11, wherein the plant protein ingredient is wheat gluten.

13. The method according to any one of claims 7 to 12, wherein the extrusion step b) is performed at 120-180°C.

**FIG. 1**

*a)*

*b)*

# FIG. 2

**FIG. 3**

100% WG

SF 1

SF 2

80:20

80:20

60:40

60:40

40:60

40:60

100% SF 1

100% SF 2

# FIG. 4

**FIG. 5**

**FIG. 6**

**FIG. 7**

| | Europäisches Patentamt<br>European Patent Office<br>Office européen des brevets | **EUROPEAN SEARCH REPORT** | **Application Number**<br>EP 25 15 4988 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 632 874 A (OCEAN UNIV CHINA ET AL.) 12 November 2021 (2021-11-12) * abstract; claims 1-9; examples 1, 2 * ----- | 1-13 | INV.<br>A23J3/22<br>A23J3/26<br>A23L17/60 |
| T | Rahikainen Moona ET AL: "Global production of macroalgae and uses as food, dietary supplements and food additives", , 1 May 2021 (2021-05-01), pages 1-20, XP093291726, Retrieved from the Internet: URL:https://2020.submariner-network.eu/images/grass/outputs/Seaweed_usage_GRASS_MR_03092021.pdf [retrieved on 2025-07-02] * mid of second paragraph; page 2; table 1 * * second paragraph; page 5 * * second paragraph; page 8 * ----- | 2,8 | A23L33/185<br>A23P30/20<br>A23J3/18<br>A23L33/175 |
| T | SAFI CARL ET AL: "Evaluation of the protein quality of Porphyridium cruentum", JOURNAL OF APPLIED PHYCOLOGY., [Online] vol. 25, no. 2, 31 July 2012 (2012-07-31), pages 497-501, XP093291754, NL ISSN: 0921-8971, DOI: 10.1007/s10811-012-9883-4 Retrieved from the Internet: URL:http://link.springer.com/article/10.1007/s10811-012-9883-4/fulltext.html> [retrieved on 2025-07-02] * abstract; table 2 * ----- -/-- | 5,11 | **TECHNICAL FIELDS SEARCHED (IPC)**<br>A23J<br>A23P<br>A23L |

The present search report has been drawn up for all claims

| Place of search | Date of completion of the search | Examiner |
|---|---|---|
| Munich | 2 July 2025 | Bender, Pia |

page 1 of 2

| | Europäisches Patentamt<br>European Patent Office<br>Office européen des brevets | **EUROPEAN SEARCH REPORT** | **Application Number**<br>EP 25 15 4988 |
|---|---|---|---|

### DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| A | MAULIDA ARLIN ET AL: "The Development of Hybrid Food as Meat Analog Strips Based on Seaweed Ulva ohnoi and Surimi",<br>BIO WEB OF CONFERENCES, [Online]<br>vol. 147, 1 January 2024 (2024-01-01),<br>page 01021, XP093291760,<br>ISSN: 2117-4458, DOI:<br>10.1051/bioconf/202414701021<br>Retrieved from the Internet:<br>URL:https://www.bio-conferences.org/articl es/bioconf/pdf/2024/66/bioconf_eafta2024_0 1021.pdf><br>[retrieved on 2025-07-02]<br>* the whole document *<br>----- | 1-6 | |
| | | | **TECHNICAL FIELDS<br>SEARCHED (IPC)** |

The present search report has been drawn up for all claims

| Place of search | Date of completion of the search | Examiner |
|---|---|---|
| Munich | 2 July 2025 | Bender, Pia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 4988

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2025

| Patent document cited in search report | Publication date | Patent family member(s) | Publication date |
|---|---|---|---|
| CN 113632874 A | 12-11-2021 | NONE | |

EPO FORM P0459

For more details about this annex : see Official Journal of the European Patent Office, No. 12/82